# EUROPEAN PATENT APPLICATION

(11) **EP 1 369 808 A2**
(43) Date of publication of application: **10.12.2003**
(21) Application number: 03012174.3
(22) Date of filing: 03.06.2003
(51) Int. Cl.: G06F 19/00

(54) **Electronic competition network system and method**

(30) Priority: 07.06.2002 JP 2002167323
(71) Applicant: NEC CORPORATION, Tokyo (JP)
(72) Inventor: Abe, Yusuke, Nec Costum Technica, Ltd., Tokyo (JP)
(74) Representative: VOSSIUS & PARTNER

(57) **Abstract**

The competition progress or competition results of a competition that is held at each of a plurality of competition sites in which electronic competition systems are installed are transmitted to a relay server by way of the Internet. In the relay server, the competition progress or competition results that have been transmitted in are transmitted to electronic competition systems that are installed in competition sites that have been determined in advance by the transmission source of the competition progress or competition results. In the electronic competition systems to which the competition progress or competition results have been transmitted from the relay server, the competition progress or competition results that have been transmitted from the relay server are accumulated together with the competition progress and competition results of a competition that is held at competition sites at which the electronic competition systems are installed, and the accumulated competition progress and competition results are published on the Internet.

## Description

The present invention relates to an electronic competition network system for holding the same kind of electronic competitions at a plurality of competition sites.

Target shooting is known as one type of competition. In a shooting competition, the use of a light-beam gun is to be preferred over shooting with live ammunition using guns that shoot real bullets, which, from the standpoint of safety, must be conducted with special caution. Known light-beam guns include guns developed for use in competitions that employ flashlights and guns that are used for target practice in which a light-beam gun is directly wired to a computer for indicating the impact of the light bullets.

When a computer and light-beam gun are directly connected by electrical wiring, however, this electrical wiring detracts from the highly sharpened senses of contestants and interferes with their mental composure and concentration, and a means other than wires for connecting the light-beam gun and computer is therefore to be desired. Further, a system is also desired in which the accuracy of detection of the strike point of the laser light of the light-beam gun in the optical system constitutes the level of the competition, and in which the safety of the light-beam gun that shoots laser light is guaranteed. Finally, a system is also desired that, in addition to meeting these demands, obtains an improvement in the speed and accuracy of calculating competition scores.

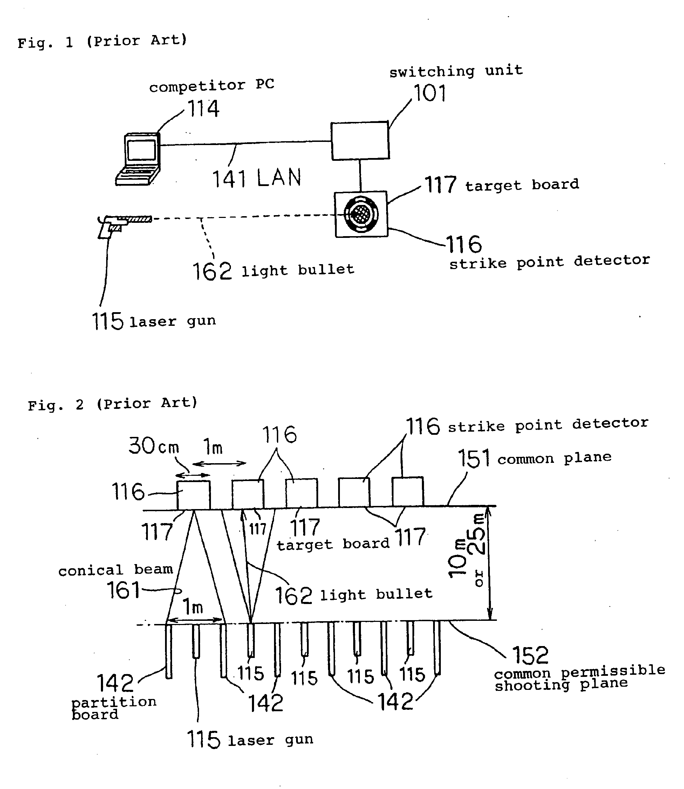

We first refer to FIG. 1, which shows an example of the construction of an electronic competition system of the prior art for holding target shooting using a laser gun that shoots a laser beam.

As shown in FIG. 1, this example of the prior art is made up from: laser gun 115 for shooting light bullets 162, which are constituted by a laser beam, under the manipulation of a competitor; strike point detector 116 for detecting the strike point of light bullets 162 on target board 117, and for allowing the removable attachment of target board 117, which is struck by light bullets 162 that have been emitted from laser gun 115; competitor PC 114 that is installed next to the shooting box for displaying strike results in strike point detector 116; and switching unit 101 for connecting strike point detector 116 and competitor PC 114. Laser gun 115 and strike point detector 116 are provided at points that are separated by a distance that has been determined beforehand as a facet of the shooting competition, and target boards that vary according to this distance are selectively attached to strike point detector 116. In addition, switching unit 101 is the switching hub of 10 BASE-T LAN 141.

Explanation next regards the method of competition in an electronic competition system that is configured according to the foregoing description.

FIG. 2 is an explanatory view of the competition method in the electronic competition system shown in FIG. 1.

As shown in FIG. 2, a plurality of strike point detectors 116 that is shown in FIG. 1 are arranged to correspond to a plurality of shooting boxes that are each formed by two partition boards 142. Although an example is shown in FIG. 2 in which five sets of shooting boxes and five sets of strike point detectors 116 are arranged, the invention is not limited to this number of sets. One shooting box and one strike point detector 116 have a one-to-one correspondence both in terms of position and the form of competition, and as a rule, light bullets cannot be fired at a plurality of strike point detectors 116 from a single shooting box. In addition, a square or circular target board 117 is attached to the front surface of each strike point detector 116.

Common plane 151 is formed by the front surface of each target board 117, and common permissible shooting plane 152 is formed at each shooting box. This common plane 151 and common permissible shooting plane 152 are both vertical and parallel to each other. Based on the type of competition, common plane 151 and common permissible shooting plane 152 are separated by a distance of, for example, 10 meters or 25 meters. In addition, the width of a shooting box along common permissible shooting plane 152 is one meter when one target is provided for each gun, but can be variably prescribed when n targets are provided for one gun. In the example, the width of each of strike point detectors 116 is 30 cm, and the distance between the centers of two adjacent strike point detectors 116 is 1 meter.

When a competitor manipulates laser gun 115 by, for example, directing laser gun 115 toward target board 117 and pulling the trigger of laser gun 115 to emit light bullet 162 from laser gun 115, light bullet 162 that is constituted by a laser beam is emitted from laser gun 115. A semiconductor laser oscillation element may be used as the light source of light bullets 162 that are emitted from laser gun 115.

To maintain the safety of the competition, the system is constructed such that a conical beam 161 generated by an infrared LED is transmitted toward the shooting box from strike point detector 116, and if conical beam 161 that is transmitted from strike point detector 116 is not received by laser gun 115, i.e., if laser gun 115 is not directed toward target board 117, the competitor is not able to shoot light bullets 162.

In this electronic competition system, a signal that constitutes one of the sufficiency conditions for enabling the emission of light bullets 162 from laser gun 115 is generated on the side of target board 117 and thus is controlled on the target side rather than on the gun side. This arrangement therefore results in a fair competition system that defers to the intentions of the competition sponsors (judges). In addition, each of conical beams 161 that are transmitted from strike point detectors 116 arrives at only the respective opposing shooting boxes and in principle does not reach two shooting boxes. In this system, moreover, laser gun 115 need not transmit information to the outside other than light bullets 162 and therefore does not need to be connected by wires to competitor PC 114.

Just as with actual bullets from a real gun, light bullets 162 that are emitted from laser gun 115 advance directly in the direction that laser gun 115 was pointed after leaving the muzzle of laser gun 115. Light bullets 162 that have been emitted from the muzzle of laser gun 115 have a signal that uniquely corresponds to laser gun 115. Light bullets 162 have high parallel luminous flux and strike target board 117 as dots of light.

When light bullets 162 that have been emitted from laser gun 115 strike target board 117 that is attached to strike point detector 116, the strike point on strike point detector 116 is detected and the detected strike point information is transmitted to competitor PC 114 by way of switching unit 101.

Strike point detector 116 has an adjustment capability for increasing the electrical, mechanical, and optical accuracy of the strike point detection optical elements, and the accuracy of detecting the strike point of laser light can thus be employed as the competition level.

In competitor PC 114, the shooting score is calculated based on strike point information that is transmitted in from strike point detector 116, and the calculated score is displayed. In addition, because information that can identify the competitors, such as competitors' competition numbers, as well as information such as the number of times a competitor has currently fired is registered in competitor PC 114, the competitors' competition number, bullet numbers, the score corresponding to each bullet number, the total score, and the strike points of light bullets 162 on target board 117 can be displayed simultaneously or at time intervals.

Laser gun 115 fires a plurality of light bullets 162 with each operation of the trigger. This provision not only enables averaging of the scores of light bullets 162, but also allows the score for each light bullet 162 to be found. This method of calculating scores allows differences in score to be obtained that are based on, for example, slight movements of the hand after pulling the trigger, enables the movement of a competitor's entire body to be expressed numerically, and can offer new competition modes that were not available in single-shot shooting with real bullets.

Light bullets 162 each include a strike point detection signal that is used for detecting the strike point and a light-bullet discrimination signal for distinguishing a light bullet from other light bullets. The strike point detection signal is transmitted to target board 117 even when the trigger of laser gun 115 is not pulled, allowing the potential strike point to be detected by strike point detector 116. The strike points of a plurality of light bullets 162 can thus be tracked as a continuous series of points.

When shooting with real bullets, a competitor first checks the feel of the gun before beginning to compete, and while competing, takes test shots at a target other than the object of scoring before actually shooting at the object of scoring. For this reason, a test shooting mode and an actual shooting mode are provided as operating modes in the electronic competition system.

During a preparation period before starting the competition, competitors first check the feel of laser guns 115 in a state in which light bullets 162 are not emitted. Then, after the competition begins, the competitors switch to a test-shooting mode to take test shots at a target other than the object of scoring, and, after completing test shooting, switch to the actual shooting mode to actually shoot at the object of scoring.

As described in the foregoing explanation, it is now becoming possible to realize an electronic competition system that is highly applicable to competition modes and that is safer than shooting with actual bullets. Owing to these advantages, it is expected that the number of people using such electronic competition systems as a popular competition will grow dramatically, and it can be expected that the use of such electronic competition systems will increase to the point that tournaments will be held on a national or international scale.

In the above-described electronic competition system of the prior art, however, there is the problem that an infrastructure for an electronic competition system that can accommodate a large-scale tournament has not yet been constructed, and the electronic competition system in its current form is only capable of accommodating a competition at a single competition site.

The present invention was realized in view of the above-described problems of the prior art and has as an object the provision of an electronic competition system that is capable of holding the same type of electronic competition at a plurality of competition sites.

To achieve the above-described object, the electronic competition network system of the present invention is an electronic competition network system for using electronic competition means that are installed in each of a plurality of competition sites to hold the same type of electronic competition, and includes: a plurality of first servers that are installed in each of the plurality of competition sites and connected to the electronic competition means by way of a communication network for successively accumulating the competition progress and competition results of a competition that is held using the electronic competition means, managing the accumulated competition progress and competition results as a database, and further, transmitting the competition progress or competition results of the competition that is held using the electronic competition means onto a communication network; and a second server for transmitting, by way of a communication network, the competition progress or competition results that have been transmitted on the communication network to first servers that have been determined in advance of the plurality of first servers; wherein the first servers successively accumulate the competition progress or competition results of a competition that is held using the electronic competition means that is connected to the first servers by way of the communication network together with the competition progress or competition results that have been transmitted in from the second server and manage the accumulated competition progress and competition results as a database.

In addition, the second server may transmit, by way of a communication network, the competition progress or competition results that have been transmitted on the communication network to, of the plurality of first servers, first servers that have been determined in advance by the first server that is the transmission source of the competition progress or competition results.

The second server may transmit, by way of a communication network, the competition progress or competition results that have been transmitted on the communication network to first servers that have been determined in advance by another computer.

The second server may register, for each one of the plurality of first servers, the first servers that are to be the transmission destinations of competition progress or competition results when that first server is the transmission source of the competition progress or competition results.

The second server may transmit, of the information that is included in the competition progress or competition results that have been transmitted on a communication network, only information that is determined according to the transmission destinations to first servers that have been determined in advance.

The second server may change information that is transmitted to the first servers according to the time or time period.

The second server may change the transmission destinations of the competition progress or competition results that have been transmitted on a communication network according to the time or time period.

First servers may publish the competition progress or competition results on the communication network.

First servers may include a display means for displaying the competition progress or competition results.

First servers may transmit the competition progress or competition results to a third server that can be connected to a communication network, and the third server may publish the competition progress or competition results.

The electronic competition network system may further include a fourth server that is connected to the second server by way of a communication network for integrating and managing the competition progress or competition results that are managed by the plurality of first servers; and the second server may transmit the competition progress or competition results that have been transmitted on the communication network to the fourth server by way of the communication network.

The electronic competition network system of the present invention for realizing the above-described objects is an electronic competition network system for using electronic competition means that are installed at each of a plurality of competition sites to hold the same type of electronic competition, and includes: a plurality of first servers that are installed in each of the plurality of competition sites and connected to the electronic competition means by way of a communication network for both controlling the progress of a competition that is held using the electronic competition means and transmitting, on a communication network, control information for controlling the progress of the competition that is held using the electronic competition means; and a second server for transmitting, by way of a communication network, the control information that has been transmitted on the communication network to first servers that have been determined in advance of the plurality of first servers; wherein each of the first servers, based on control information that has been transmitted in from the second server, controls the electronic competition means that is connected to that first server by way of the communication network.

The second server may transmit, by way of a communication network, the control information that has been transmitted on the communication network to first servers of the plurality of first servers that have been determined in advance by the first server that is the transmission source of the control information.

The second server may transmit, by way of the communication network, the control information that has been transmitted on the communication network to first servers that have been determined beforehand by another computer.

The second server may change the transmission destinations of the control information that has been transmitted on the communication network according to the time or time period.

First servers may manage participant registrations of competitors that are to compete.

First servers may publish, on the communication network, information relating to competitors who have completed the participant registration.

First servers may perform scheduling of the competitors.

First servers may manage the progress of the competition of the competitors.

First servers may, based on the competition results, select competitors who are to participate in the next competition to be held from among competitors that have completed the participant registration.

First servers may publish, on the communication network, information relating to the competitors that have been selected.

Information relating to the competitors that have been selected may include pictures of the competitors.

The electronic competition means may include: a light-beam gun for emitting light bullets; a strike point detection means for detecting the strike point when a light bullet that has been emitted from the light-beam gun strikes a target; and a competitor computer that is connected to the strike point detection means by way of a communication network for calculating the score based on the strike point of a light bullet, and for displaying the score that has been calculated or the strike point of a light bullet.

The competitor computer may have data base clients that are capable of accessing the data that are managed by the first server.

The competitor computer may include identification information input means for receiving identification information that enables identification of competitors that are to take part in said competition; and first servers may include authentication means for collating identification information that has been received by way of the identification information input means with identification information that has been registered in advance, and, when the two forms of identification information match, recognizing that a person who has applied identification information as input by way of the identification information input means is a competitor that is identified by the identification information.

The resolution of the strike point detection means may be set based on the competition level.

The electronic competition method of the present invention for achieving the above-described objects is an electronic competition method for using electronic competition means that are installed at each of a plurality of competition sites to hold the same type of electronic competition, and includes processes of: by means of servers that are installed at each of the plurality of competition sites, successively accumulating competition progress and competition results of a competition that is held by means of the electronic competition means at the plurality of competition sites and managing the accumulated competition progress and competition results as a database; transmitting the competition progress or competition results of a competition that is held using the electronic competition means at the plurality of competition sites, from the servers onto a communication network; transmitting, by way of a communication network, the competition progress or competition results that have been transmitted onto the communication network, to servers that have been determined in advance from among servers that are installed at each of the plurality of competition sites; and successively accumulating the competition progress or competition results that have been transmitted by way of the communication network together with competition progress and competition results that are managed as the database, and managing the thus accumulated competition progress and competition results as a database.

The competition progress or competition results that have been transmitted onto the communication network may be transmitted by way of a communication network to, of servers that are installed at each of the plurality of competition sites, servers that have been determined in advance by the server that is the transmission source of the competition progress or competition results.

The competition progress or competition results that have been transmitted onto the communication network may be transmitted by way of a communication network to servers that have been determined in advance by another computer.

The electronic competition method may include a process of transmitting to servers that have been determined in advance, of the information that is included in the competition progress or competition results that has been transmitted onto the communication network, only information that has been determined according to transmission destinations.

The information that is transmitted to the servers may change according to the time or time period.

The transmission destinations of the competition progress or competition results that are transmitted onto the communication network may change according to the time or time period.

The electronic competition method may include a process of publishing the competition progress or competition results on a communication network that is provided at the competition sites.

The electronic competition method may include a process of displaying the competition progress or competition results on a display means that is provided at the competition sites.

The competition progress or competition results may be transmitted to a Web server that can connect to a communication network, and the competition progress or competition results may be published by means of the Web server.

The electronic competition method may further include: a process of transmitting the competition progress or competition results that have been transmitted onto the communication network to an integrative server that is connected by way of the server; and, by means of the integrative server, integrating and managing the competition progress or competition results that have been transmitted in by way of the server.

An electronic competition method of the present invention for achieving the above-described objects is an electronic competition method for using electronic competition means that are installed at each of a plurality of competition sites to hold the same type of competition, and includes processes of: controlling the progress of a competition that is held using the electronic competition means at the plurality of competition sites; transmitting, on the communication network, control information from a server for controlling the progress of a competition that is held using the electronic competition means in the plurality of competition sites; transmitting, by way of a communication network, the control information that has been transmitted onto the communication network to, of servers that are installed at each of the plurality of competition sites, servers that have been determined in advance; and controlling the electronic competition means based on the control information that has been transmitted in by way of the communication network.

The control information that is transmitted on the communication network may be transmitted by way of the communication network to, of the servers that are installed in each of the plurality of competition sites, servers that have been determined in advance by the server that is the transmission source of the control information.

The control information that has been transmitted to the communication network may be transmitted by way of the communication network to servers that have been determined in advance by another computer.

The transmission destination of control information that has been transmitted onto the communication network may change according to the time or time period.

The electronic competition method may include a process of managing, by means of the servers, participant registration of competitors that are to take part in the competition.

The electronic competition method may include a process of publishing, on a communication network that is provided at the competition sites, information that relates to competitors that have completed the participant registration.

The electronic competition method may include a process of performing scheduling of the competitors by means of the servers.

The electronic competition method may include a process of managing the progress of competition of the competitors by means of the servers.

The electronic competition method may include a process of using the servers to select, from among competitors that have performed the participant registration, those competitors that are to participate in the next competition based on competition results.

Information that relates to the competitors that have been selected may be published on a communication network that is provided at the competition sites.

Information that relates to the competitors that have been selected may include pictures of these competitors.

The electronic competition method may include processes of: registering in advance identification information that can identify competitors that are to take part in a competition; when identification information that can identify a competitor that is to take part in the competition is applied as input from the outside, collating the identification information that has been registered in advance with the identification information that has been applied as input from the outside; and, when the two forms of identification information match, recognizing the person that applied the identification information as input from the outside as the competitor that is identified by the identification information.

The server of the present invention for achieving the above-described object is a server that is used in an electronic competition network system for using electronic competition means that are installed at each of a plurality of competition sites to hold the same type of electronic competition, and includes: a database for registering, of the plurality of competition sites, those competition sites to which competition progress or competition results at the plurality of competition sites are to be transmitted; and a relay control means for, when competition progress or competition results at the competition sites are transmitted from competition sites by way of a communication network, transmitting the competition progress or competition results that have been transmitted from the competition sites to competition sites that have been registered in the database as the transmission destinations of the competition progress or competition results that are transmitted from the competition sites.

Of the information that is included in the competition progress or competition results that have been transmitted onto the communication network, only information that is determined according to the transmission destinations may be sent to competition sites that have been determined in advance.

The information that is transmitted to the competition sites may change in accordance with time or time period.

The transmission destinations of the competition progress or competition results that are transmitted onto the communication network may change according to the time or time period.

A server of the present invention for achieving the above-described object is a server that is used in an electronic competition network system for using electronic competition means that are installed in each of a plurality of competition sites to hold the same type of electronic competition, and includes: a database for registering, of the plurality of competition sites, those competition sites to which control information for controlling the progress of a competition at the plurality of competition sites is to be transmitted; and a relay control means for, when control information is to be transmitted from a competition site by way of a communication network, transmitting control information that has been transmitted from the competition site to competition sites that have been registered in the database.

The transmission destinations of control information that is transmitted onto a communication network may change according to the time or time period.

A server of the present invention for achieving the above-described object is provided with a computer program for executing procedures of: receiving, by way of a communication network, competition progress or competition results that have been transmitted from the competition sites; and transmitting the competition progress or competition results that have been received to competition sites that have been determined in advance.

In addition, a server may be provided with a computer program for executing procedures of: receiving, by way of a communication network, competition progress or competition results that have been transmitted from the competition sites; identifying the competition site of a transmission source of the competition progress or competition results that have been received; referring to a database and determining the transmission destinations of competition progress or competition results that have been transmitted from the competition site that has been identified; and transmitting the competition progress or competition results that have been received to the competition sites that have been determined.

A server may be provided with a computer program for executing procedures of: receiving, by way of a communication network, control information that has been transmitted from the competition sites; and transmitting the control information that has been received to competition sites that have been determined in advance.

A server may also be provided with a computer program for executing procedures of: receiving, by way of a communication network, control information that has been transmitted from the competition sites; identifying the competition sites that are the transmission sources of the control information that has been received; referring to the database and determining the transmission destinations of control information that has been transmitted from the identified competition sites; and transmitting control information that has been received to competition sites that have been determined. The Effect of the Invention

In the present invention that has been constructed according to the foregoing description, when a competition is held using electronic competition means that are installed at each of a plurality of competition sites, information relating to the competition is successively accumulated by first servers that are installed at each of the plurality of competition sites and managed as a database. In addition, information that relates to a competition that is held using electronic competition means at a plurality of competition sites is transmitted from the first servers to a second server by way of a communication network. At the second server, information that has been transmitted in from the first servers is transmitted by way of the communication network to first servers that have been determined in advance. At a first server to which information that relates to the competition has been transmitted in from the second server, the information that has been transmitted in from the second server is successively accumulated with information that is managed as a database and thus managed as a database. In addition, information that has been transmitted in from the second server is published on a communication network that is connected to the first server that has received the information.

Thus, when a competition is held using electronic competition means that are installed in each of a plurality of competition sites, information relating to the competition is transmitted to other competition sites that have been determined in advance, and as a result, information relating to the competition can be mutually reported among a plurality of competition sites, and moreover, information can be easily exchanged. Further, because information relating to the competition that is held in a plurality of competition sites is collected and accumulated, when the same electronic competition is held at a plurality of competition sites, the competition can be conducted as if held at a single competition site.

The above and other objects, features, and advantages of the present invention will become apparent from the following description with reference to the accompanying drawings, which illustrate examples of the present invention.
FIG. 1 shows an example of the construction of a electronic competition system of the prior art for target shooting using a laser gun that emits a laser beam.
FIG. 2 is a view for explaining a competition method in the electronic competition system that is shown in FIG. 1.
FIG. 3 shows an embodiment of the electronic competition network system of the present invention.
FIG. 4 shows the construction of the electronic competition system that is shown in FIG. 3.
FIG. 5 is a flow chart for explaining the competition method in the electronic competition network system that is shown in FIGs. 3 and 4.

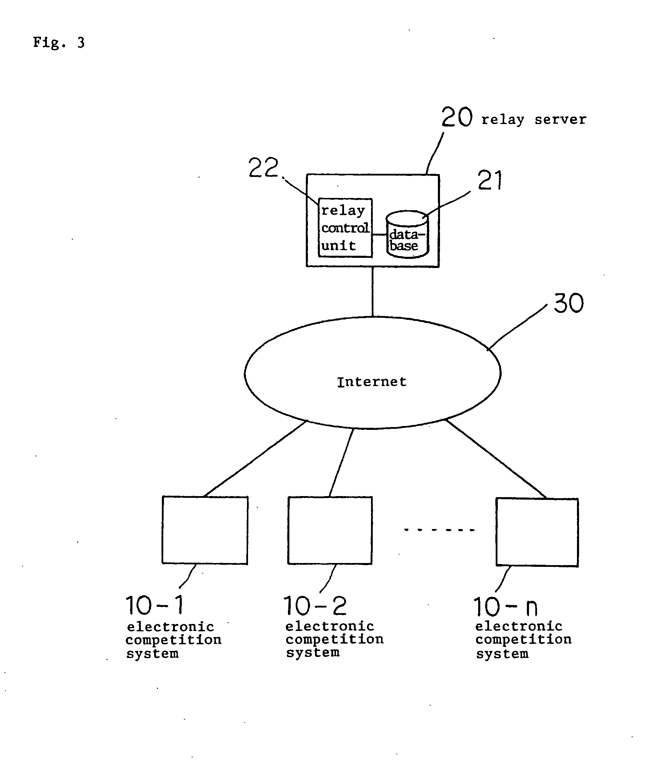

Explanation next regards an embodiment of the present invention. We first refer to FIG. 3, which shows an embodiment of the electronic competition network system of the present invention.

As shown in FIG. 3, the present embodiment is made up by: electronic competition systems 10-1...10-n that are installed in each of a plurality of competition sites in a form that allows connection to Internet 30 for holding an electronic shooting competition in each of the competition sites; and relay server 20, which is the second server, that is constructed so as to allow connection to electronic competition systems 10-1...10-n by way of Internet 30, for transmitting, by way of Internet 30, the competition progress and competition results at the competition sites at which electronic competition systems 10-1...10-n are installed to the electronic competition systems of competition sites that have been determined in advance; whereby the competition progress and competition results at other competition sites that have been transmitted in by way of relay server 20 can be viewed at electronic competition systems 10-1...10-n; and the competition progress and competition results at competition sites at which electronic competition systems 10-1... 10-n have been installed are accumulated together with the competition progress and competition results at other competition sites that have been transmitted in by way of relay server 20.

In addition, relay server 20 is made up from: database 21 for registering, for each of electronic competition systems 10-1... 10-n, which electronic competition systems of electronic competition systems 10-1... 10-n competition progress and competition results at competition sites at which electronic competition systems 10-1... 10-n are installed are to be transmitted; and relay control unit 22 for transmitting, by way of Internet 30, competition progress and competition results at competition sites at which electronic competition systems 10-1... 10-n are installed to electronic competition systems based on information that is registered in database 21.

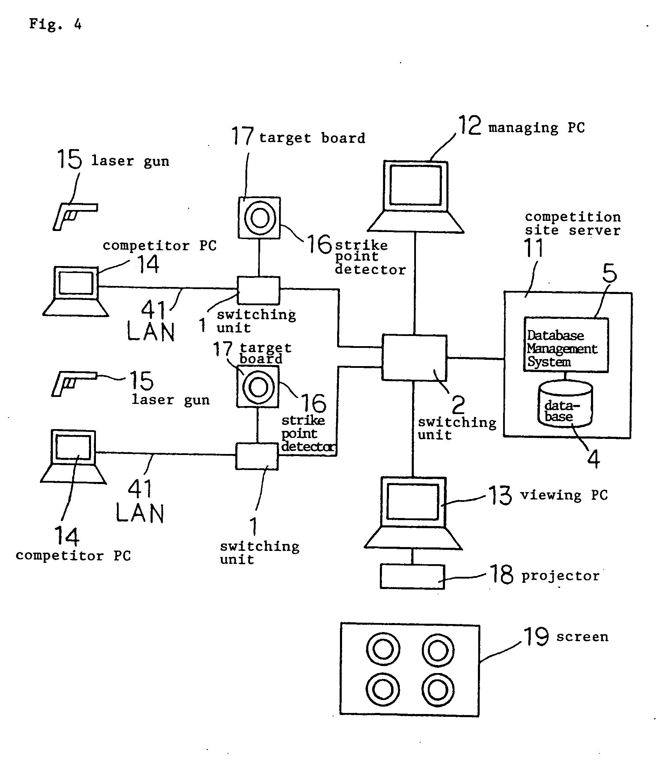

FIG. 4 shows the construction of electronic competition systems 10-1... 10-n that are shown in FIG. 3. Electronic competition systems 10-1... 10-n that are shown in FIG. 3 all have the same construction.

As shown in FIG. 4, electronic competition systems 10-1... 10-n in the present embodiment are each made up from: laser gun 15 for emitting, in accordance with the manipulation by a competitor, light bullets that are constituted by a laser beam; strike point detector 16 for detecting the strike points of light bullets on target board 17 and which allows the removable attachment of target board 17, on which light bullets emitted from laser gun 15 strike; competitor PC 14 that is installed in the vicinity of a shooting box for displaying both strike results at strike point detector 16 and instructions to competitors; switching unit 1 for connecting strike point detector 16 and competitor PC 14 on a LAN; managing PC 12 for instructing the progress of the competition; viewing PC 13 for viewing competition progress, competition results, or information relating to a competition; projector 18 for projecting the information that is displayed on viewing PC 13 onto screen 19; competition site server 11, which is the first server and which is constructed so as to allow connection to Internet 30, for displaying, on viewing PC 13, the competition progress and competition results at the competition site in which this electronic competition system is installed or information that relates to the competition, for transmitting the competition progress, competition results, or information relating to the competition to relay server 20 by way of Internet 30, for displaying on viewing PC 13 the competition progress, competition results or information relating to a competition at other competition sites that has been transmitted in from relay server 20, and for accumulating competition progress and competition results at the competition site at which this electronic competition system is installed with the competition progress and competition results that have been transmitted in from relay server 20; and switching unit 2 for both connecting competition site server 11, managing PC 12, and viewing PC 13 in a LAN as well as connecting to the LAN a shooting stand composed of strike point detector 16 and competitor PC 14 that are connected by switching unit 1 in a LAN.

Competition site server 11 is composed of: Database Management System (DBMS) 5 for accumulating and managing the competition progress and competition results at each competition site as a database; and database 4 for registering the data that have been accumulated by database management system 5. A database management system such as the system marketed by Oracle can typically be used as database management system 5. In addition, laser gun 15 and strike point detector 16 are provided at positions separated by a distance that has been determined in advance as a condition of the shooting competition, and a type of target board that corresponds to this distance is selectively attached to strike point detector 16. Switching unit 1 is the switching hub of a 10 Base-T LAN 41. Further, although two shooting stands that are each composed of laser gun 15, strike point detector 16, target board 17, competitor PC 14, and switching unit 1 are shown in the figure in the present embodiment, the present invention is not limited to two stands.

The competition method in an electronic competition network system that is constructed according to the foregoing description is next described, taking as an example a case in which the same type of competition is held at competition sites in which electronic competition systems 10-1 and 10-2 are installed, and the competition progress and competition results at the competition site at which electronic competition system 10-1 is installed are transmitted to electronic competition system 10-2 by way of relay server 20.

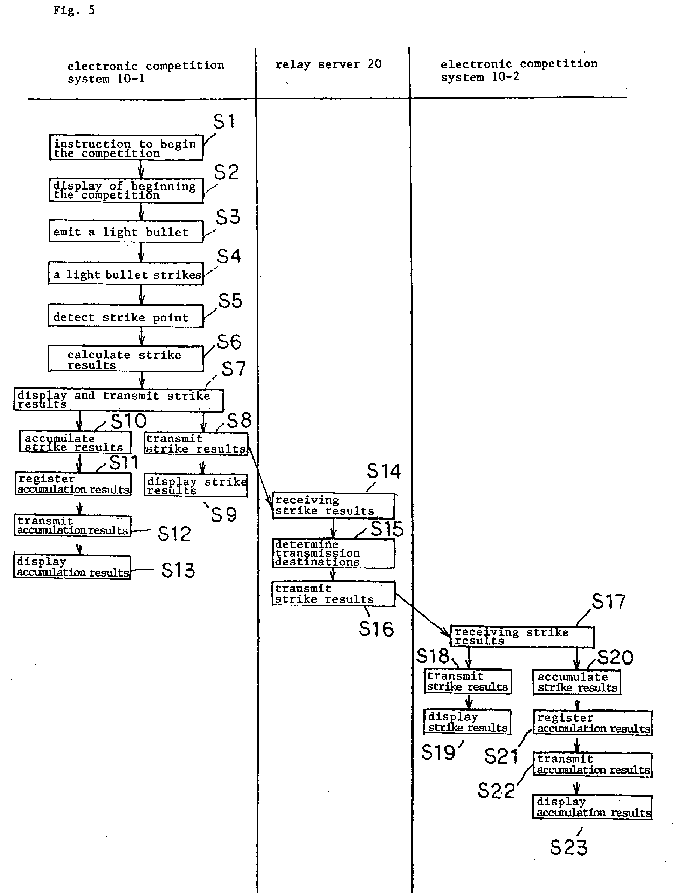

FIG. 5 is a flow chart for explaining the competition method in the electronic competition network system that is shown in FIGs. 3 and 4.

When a competition is started at the competition site in which electronic competition system 10-1 is installed, managing PC 12 of electronic competition system 10-1 is first given an instruction to begin the competition (Step S1). At this time, instructions are applied as input to managing PC 12 of electronic competition system 10-1 for, for example, designating the competition events, designating whether the competition is a preliminary competition or final competition, and designating whether this is the start of trial shooting or the start of the main shooting event.

The information that is designated by means of managing PC 12 of electronic competition system 10-1 is transmitted to competitor PC 14 by way of competition site server 11 of electronic competition system 10-1 and then displayed (Step S2).

The information that is designated by means of managing PC 12 of electronic competition system 10-1 is also transmitted to relay server 20 by way of competition site server 11 of electronic competition system 10-1, and this information is then transmitted by relay server 20 to competition site server 11 of electronic competition system 10-2, which has been determined in advance as the transmission destination of the information that has been transmitted in from electronic competition system 10-1, whereby the information that has been designated by managing PC 12 of electronic competition system 10-1 is displayed at competitor PC 14 of electronic competition system 10-2.

After the competitor has confirmed that an indication of the start of the competition is displayed by competitor PC 14, the competitor performs operations such as, for example, aiming laser gun 15 at target board 17 and pulling the trigger of laser gun 15 to emit a light bullet from laser gun 15, whereupon a light bullet made up by a laser beam is emitted from laser gun 15 (Step S3). A semiconductor laser oscillation element may be used as the light source of light bullets that are emitted from laser gun 15.

To maintain the safety of the competition, the electronic competition system is arranged such that a conical beam that is generated by an infrared LED is transmitted from strike point detector 16 toward the shooting box, which is the position for competitor to shoot light bullets from laser gun 15, and if the conical beam that is transmitted from strike point detector 16 is not received by laser gun 15, i.e., if laser gun 15 is not within the shooting box and directed toward target board 17, the competitor will not be able to shoot light bullets. In this electronic competition system, a signal that constitutes one of the sufficiency conditions for allowing a light bullet to be emitted from laser gun 15 is generated from the side of target board 17 and is not under the guidance of the shooting side; and this electronic competition system thus places control on the side of the target board. This electronic competition system is therefore a fair competition system that defers to the intentions of the competition sponsors (judges). Furthermore, because laser gun 15 in this system is not required to transmit any information other than the light bullets, laser gun 15 need not be connected by wiring to competitor PC 14.

After being emitted from the muzzle of laser gun 15, light bullets that are emitted from laser gun 15 advance directly in the direction that laser gun 15 is aimed, as with real bullets from a real gun. Light bullets that are emitted from the muzzle of this laser gun 15 have a signal that corresponds uniquely to laser gun 15. The light bullets strike target board 17 as light dots having a high parallel luminous flux (Step S4).

When a light bullet that has been emitted from laser gun 15 strikes target board 17 that is attached to strike point detector 16, the strike point [of the light bullet] on strike point detector 16 is detected (Step S5), and the strike point information that is detected is transmitted to competitor PC 14 by way of switching unit 1. Strike point detector 16 has an adjustment capability for raising the electrical, mechanical, and optical accuracy of the optical elements for position detection, and the accuracy of detection of the strike point of a laser beam can therefore be made the competition level.

At competitor PC 14, scores are calculated based on strike point information that is transmitted in from strike point detector 16 (Step S6), and the calculated scores are not only displayed, but further, the calculated scores are transmitted to competition site server 11 (Step S7). Further, information that can identify a competitor such as the competitor's identification number and information such as how many times the competitor has currently fired are registered at competitor PC 14, and the competitor's identification number, the bullet number, the score corresponding to that bullet number, the total score, the strike point of the light bullet on the target board 17, and the shooting stand number are therefore transmitted to competition site server 11, and these items of information are displayed on competitor PC 14 either simultaneously or at time intervals.

At competition site server 11, the information that has been transmitted from competitor PC 14 is transmitted to viewing PC 13 and relay server 20 (Step S8).

The competitor's identification number, bullet number, the score that corresponds to that bullet number, total score, and the strike point of the light bullet on target board 17 are displayed at viewing PC 13 (Step S9). The information that is displayed on viewing PC 13 may further be projected onto screen 19 by means of projector 18.

In competition site server 11, the competition progress and competition results are accumulated at database management system 5 using the information that has been transmitted in from competitor PC 14 and the information that has been registered in database 4 (Step S10), and the results of accumulation are both registered in database 4 (Step S11) and transmitted to viewing PC 13 (Step S12). Here, the accumulation results in competition site server 11 are the accumulated competition progress and competition results in electronic competition system 10-1 up to the current time, and these results may conceivably include the strike results and competitor identification numbers of competitors that have competed so far, the bullet numbers, scores, strike points, and the rankings of the competitors according to the scores of competitors that have competed so far at the competition site in which electronic competition system 10-1 is installed.

The competition progress and competition results that have been transmitted in from competition site server 11 are displayed on viewing PC 13 (Step S13). It is also possible to project the information that is displayed on viewing PC 13 onto screen 19 by means of projector 18.

The processes of the above-described Steps S2... S13 are also similarly performed at electronic competition system 10-2.

In relay server 20, upon receiving the information that was transmitted from competition site server 11 by way of Internet 30 in Step S8 (Step S14), the transmission source of the received information is identified in relay control unit 22, following which database 21 is consulted to determine the electronic competition systems among electronic competition systems 10-1... 10-n to which the strike results at the competition site in which electronic competition system 10-1 is installed are to be transmitted (Step S15), and the information that was transmitted from competition site server 11 in Step S8 is then transmitted to the electronic competition systems that are registered in database 21 as the transmission destinations of the strike results at the competition site in which electronic competition system 10-1 is installed (Step S16).

Although it is assumed that electronic competition system 10-2 is registered in database 21 as the transmission destination of the strike results at the competition site in which electronic competition system 10-1 is installed in the present embodiment, it is also conceivable that database 21 is registered such that, for example, strike results are to be transmitted to all electronic competition systems, or strike results are to be transmitted to all electronic competition systems apart from the electronic competition system that is the transmission source of the strike results. The transmission destinations of the strike results are not limited to those destinations that are registered in database 21 in advance, and it is also possible for a transmission destination to be applied as input to relay server 20, for a transmission destination to be designated by another server (not shown in the figure) that is connected to relay server 20 or by managing PC 12, or for a transmission destination to be designated by appending to the strike results. In addition, during the progress of a competition such as a regional preliminary competition or final competition, the transmission destinations of the strike results may be changed according to the time or time period. As an example, the information of the Tokyo competition site server could be transmitted to other competition site servers within the Kanto area of which Tokyo is a part in the Kanto area preliminary competition. If the Tokyo contestants win and advance to the final competition, the transmission destinations of strike results of the Tokyo competition site server could then be changed to competition site servers for other areas (for example, the Kansai area) in which contestants have also advanced to the final competition.

The strike results that have been transmitted from relay server 20 are received by electronic competition system 10-2 by way of Internet 30 (Step S17), whereupon, in competition site server 11 of electronic competition system 10-2, the information that has been transmitted in from relay server 20 is transmitted to viewing PC 13 of electronic competition system 10-2 (Step S18).

The transmitted information from relay server 20, i.e., the identification numbers, bullet numbers, the scores that correspond to these bullet numbers, the total scores, and the strike points of light bullets on target board 17 for the contestants that have competed in the competition site in which electronic competition system 10-1 is installed, is displayed on viewing PC 13 (Step S19). The information that is displayed on viewing PC 13 may also be projected onto screen 19 by means of projector 18.

In competition site server 11 of electronic competition system 10-2, the competition progress and competition results are accumulated in database management system 5 using the information that has been transmitted in from relay server 20 and the information that is registered in database 4 (Step S20), and the results of accumulation are both registered in database 4 (Step S21) and transmitted to viewing PC 13 of electronic competition system 10-2 (Step S22).

The competition results that have been transmitted in from competition site server 11 are displayed on viewing PC 13 of electronic competition system 10-2 (Step S23). The information that is displayed on viewing PC 13 may also be projected onto screen 19 by means of projector 18. Here, the results of accumulation in competition site server 11 are the accumulation of the competition progress and competition results up to the current time in electronic competition systems 10-1 and 10-2, and may include, for example, the strike results, the identification numbers, bullet numbers, scores, and strike points of the competitors that have competed up to the current time at the competition sites in which electronic competition systems 10-1 and 10-2 are installed, as well as the rankings of the competitors based on the scores of the competitors that have competed up to the current time.

Thus, in the competition site in which electronic competition system 10-2 is installed, the competition progress and competition results at the competition site in which electronic competition system 10-1 is installed and the competition progress and competition results at the competition site in which electronic competition system 10-2 is installed can be viewed at the same time on viewing PC 13 or on screen 19 of the competition site in which electronic competition system 10-2 is installed; and further, the competition progress and competition results at the competition site in which electronic competition system 10-1 is installed and the competition progress and competition results at the competition site in which electronic competition system 10-2 is installed can be accumulated together by a single electronic competition system and the accumulated results then viewed.

In the present embodiment, the strike points of a plurality of light bullets can be tracked as a continuous series of points. This track is displayed on competitor PC 14 and viewing PC 13. The size of the area of this type of track, the average distance from the origin point, and the angular distribution around the origin point variously and precisely represent the relative movement of the gun barrel of laser gun 15, and this type of tracking is beyond the capability of an actual shooting competition of the prior art. Knowing the fluctuation of this track can, for example, help a competitor correct his or her operation of the trigger of laser gun 15.

Competitor PC 14 includes a database client function that is capable of accessing the data of database management system 5, and a competitor can therefore check the competition progress and competition results that are being managed by database management system 5 (for example, review the competition results) during a competition by means of competitor PC 14.

In addition, each of the competitors, judges, and spectators at a competition site can check the competition results that are being managed by database management system 5 by using a terminal (such as a personal computer, a portable telephone, or a PDA) that can connect to LAN 41, which is the communication network, to access competition site server 11. Further, the competition progress and competition results may include: the match results, the standings of competitors at the current time (real-time ranking), the current state of the each competitor's target, the current state of strikes (the average scores, strike locations, and a graph analyzing the strike locations), and in addition, the scores, the strike points, and the tracks (traces) of the strike points for each competitor.

In addition to being published on LAN 41, it is also possible for the competition progress and competition results at a competition site to be published by a Web server (not shown in the figure), which is the third server, that can connect to Internet 30. In this case, the competition progress and competition results at competition sites at which electronic competition systems 10-1... 10-n are installed are transmitted to relay server 20 from competition site servers 11 of electronic competition systems 10-1... 10-n; at relay server 20, the competition progress and competition results that have been transmitted in from competition site servers 11 are transmitted to the Web server; and at the Web server, the competition progress and competition results at the competition sites at which electronic competition systems 10-1... 10-n are installed are published on Internet 30.

Further, based on the competition progress and competition results of each of the competitors that are being managed by database management system 5, competition site servers 11 select, from among all competitors, the competitors that are to advance to the final competition (the finalists), and publishes information on each of the finalists on LAN 41. Information on the finalists includes the finalists' photographs, names, competition experience, and competition progress and competition results up to the current time (for example, reproductions of all shooting traces). The photographs of the competitors may be taken by cameras that are provided at competitor PC 14, strike point detector 16, or competition site server 11.

In competition sites in which electronic competition systems 10-1... 10-n are installed, information on finalists that has been published can be viewed by using a terminal that can connect to LAN 41, and at competition site servers 11, scheduling of the competition for the finalists can be carried out and the progress of the competition can be managed for each of the finalists based on this information on the finalists.

It is also possible to manage the entire competition at competition site servers 11.

Management of participant registration for each competitor such as the registration of contestants and the alteration of the registration content on the day of a meet can be carried out at competition site servers 11. Information on each of the competitors that have completed participant registration is published on LAN 41 by competition site servers 11.

Scheduling, such as the order of competing for each of the competitors that have completed the participant registration that is managed, is carried out at competition site servers 11, and the scheduling data that are produced can both be made viewable through the use of terminals that can be connected to LAN 41 or printed out using a printer (not shown in the figures).

The progress of the competition for each of the competitors at a competition site can be managed at competition site servers 11. At competition site server 11, competitor PCs 14 are controlled by way of LAN 41, and information is displayed such as the preparation period, test shooting, and actual shooting competition modes that were previously described, or the amount of remaining time. In this way, a competition event can be more smoothly managed.

Competitor PC 14 and strike point detector 16 are preferably adjusted in accordance with the level of competition. In this way, the resolution of strike point detector 16 can be raised in the final round and thus adjusted to a level that is appropriate to the level of competitors that have advanced to the final round, and the competition in the final round can therefore proceed more effectively.

Competitor PC 14 may be provided with identification information input means (not shown in the figure) for receiving information that can distinguish each of the competitors, and competition site server 11 may be provided with authentication means (not shown in the figure) for authenticating competitors based on this identification information. The identification information is information for establishing whether or not a competitor is a registered participant, and may take the form of a password that has been conferred to each competitor in advance, the fingerprint of the competitor, or the membership number of the competitor.

Before the commencement of the competition, competitors use the identification information input means of competitor PC 14 to apply the identification information. The identification information is then transmitted to competition site server 11 by way of LAN 41. At the authentication means of competition site server 11, the identification information that has been transmitted in from competitor PC 14 is collated with the identification information of competitors that has been registered in advance, for example, at the time of participant registration. The result of collation determines whether the competitor is in fact a registered contestant, and if the competitor is determined to be a registered participant, the person that applied this identification information as input to the identification information input means is recognized as a competitor. In this way, persons other than registered participants are barred from competing, and the fairness of the competition can be ensured.

It is also possible to provide an integrative server (not shown in the figures), this being the fourth server, that is constructed so as to allow connection to Internet 30 for centralized management of competition progress and competition results at competition sites in which electronic competition systems 10-1... 10-n are installed. In such a case, the competition progress and competition results at competition sites at which electronic competition systems 10-1... 10-n are installed are transmitted to relay server 20 from competition site servers 11 of electronic competition systems 10-1... 10-n, and in relay server 20, the competition progress and competition results that have been transmitted in from competition site servers 11 are sent to the integrative server. In the integrative server, the competition progress and competition results at competition sites at which electronic competition systems 10-1... 10-n are installed are subjected to centralized management. For example, if competitions are held separately within the Kanto and Kansai regions, setting integrative server as the transmission destination of the competition site servers of each region allows the national competition results to be obtained at the integrative server.

In relay server 20, moreover, it is possible to transmit to competition site servers 11, of the information that has been transmitted in from competition site servers 11 within electronic competition systems 10-1... 10-n, only information that is determined according to the transmission destinations. According to one possible case, of the information that is transmitted in from the Tokyo competition site server, information relating to the three top-ranked competitors is sent to the competition site server in Kanagawa, which is within the same region; only information relating to competitors hailing from Osaka is sent to the competition site server in Osaka; while all information is sent to the integrative server. In this case, it is also possible for the types of information that are transmitted at relay server 20 to change according to the time or time period.

It is also possible for competition site server 11 of one electronic competition system of electronic competition systems 10-1... 10-n to control and manage the competition at another electronic competition system at which a competition is being held. In this case, competition site server 11 in one electronic competition system transmits, by way of the relay server, control information such as commands and programs for controlling components to the competition site servers of the other electronic competition systems that are holding the competition and thus controls and manages the components such as strike point detector 16, competitor PC 14, and viewing PC 13 of the other electronic competition systems, just as it controls and manages the components such as strike point detector 16, competitor PC 14, and viewing PC 13 that are installed in its own competition site. In this case, the competition site servers that have received the control information may, according to the components that are under its own control, decode and modify the control information and effect control over the components under its own control. In this case, the control information is information for setting the start and items of a competition, and for controlling the end of a competition or refereeing content, which is instructions regarding, for example, mistakes or fouls in the competition. The timing for the start of a competition can therefore be synchronized when a competition is being held at a plurality of sites, thus allowing the competition to proceed more smoothly.

Programs for executing the operations of competition site server 11 and relay server 20 are registered in competition site server 11 and relay server 20. These programs are for controlling the operation of the hardware of competition site server 11 and relay server 20, which are computer servers; and all of the processing of the above-described competition site server 11 and relay server 20 is specified by these programs.

The present invention as described in the foregoing description relates to an electronic competition network system for using electronic competition means that are installed in each of a plurality of competition sites to hold the same type of electronic competition, this electronic competition network system being provided with: a plurality of first servers that: are installed at each of a plurality of competition sites in a state allowing connection to the electronic competition means by way of a communication network, that control and manage information that relates to the competition that is held using the electronic competition means, and that transmit information that relates to the competition that is being held using the electronic competition means onto a network; and a second server that transmits, by way of the network, the information that has been transmitted onto the network to first servers that have been determined in advance; the first servers being constructed to successively accumulate information relating to the competition that is being held using the electronic competition means that are connected to the first servers by way of the communication network together with information that has been transmitted in from the second server and to manage this accumulated information as a database; whereby information that relates to a competition can be mutually exchanged among a plurality of competition sites, and in addition, the management of the exchange of the information that is exchanged can be simplified by controlling the second server, and a same electronic competition that is held at a plurality of competition sites can be held as though it were being held at a single competition site.

While a preferred embodiment of the present invention has been described using specific terms, such description is for illustrative purposes only, and it is to be understood that changes and variations may be made without departing from the spirit or scope of the following claims.

## Claims

1. An electronic competition network system for using electronic competition means that are installed in each of a plurality of competition sites to hold a same type of electronic competition, said electronic competition network system comprising:
a plurality of first servers that are installed in each of said plurality of competition sites and connected to said electronic competition means by way of a communication network for successively accumulating competition progress and competition results of a competition that is held using said electronic competition means, managing the accumulated competition progress and competition results as a database, and further, transmitting the competition progress or competition results of the competition that is held using said electronic competition means on a communication network; and
a second server for transmitting, by way of a communication network, said competition progress or competition results that have been transmitted on said communication network to first servers that have been determined in advance of said plurality of first servers;
wherein said first servers successively accumulate competition progress or competition results of a competition that is held using said electronic competition means that is connected to the first servers by way of said communication network together with said competition progress or competition results that have been transmitted in from said second server and manage the accumulated competition progress and competition results as a database.

2. An electronic competition network system according to claim 1, wherein said second server transmits, by way of a communication network, said competition progress or competition results that have been transmitted on said communication network to, of said plurality of first servers, first server that have been determined in advance by the first server that is a transmission source of the competition progress or competition results.

3. An electronic competition network system according to claim 1, wherein said second server transmits, by way of a communication network, said competition progress or competition results that have been transmitted on said communication network to first servers that have been determined in advance by another computer.

4. An electronic competition network system according to claim 2 or 3, wherein said second server registers, for each of said plurality of first servers, first servers that are to be transmission destinations of competition progress or competition results when that first server is the transmission sources of said competition progress or competition results.

5. An electronic competition network system according to claim 4, wherein said second server transmits, of information that is included in said competition progress or competition results that have been transmitted on a communication network, only information that is determined according to said transmission destinations to first servers that have been determined in advance.

6. An electronic competition network system according to claim 5, wherein said second server changes the information that is transmitted to said first servers according to a time or a time period.

7. An electronic competition network system according to claim 6, wherein said second server changes the transmission destinations of said competition progress or competition results that have been transmitted on a communication network according to the time or time period.

8. A system according to any one of claims
1 to 7, wherein said first servers publish said competition progress or competition results on said communication network.

9. A system according to any one of claims
1 to 8, wherein said first servers include a display means for displaying said competition progress or competition results.

10. A system according to any one of claims
1 to 9, wherein:
said first servers transmit said competition progress or competition results to a third server that can be connected to a communication network; and
said third server publishes said competition progress or competition results.

11. A system according to any one of claims
1 to 10, further comprising a fourth server that is connected to said second server by way of a communication network for integrating and managing said competition progress or competition results that are managed by said plurality of first servers;
wherein said second server transmits said competition progress or competition results that have been transmitted on said communication network to said fourth server by way of the communication network.

12. An electronic competition network system for using electronic competition means that are installed at each of a plurality of competition sites to hold a same type of electronic competition, said electronic competition network system comprising:
a plurality of first servers that are installed in each of said plurality of competition sites and connected to said electronic competition means by way of a communication network for both controlling a progress of a competition that is held using said electronic competition means and transmitting, on a communication network, control information for controlling the progress of the competition that is held using said electronic competition means; and
a second server for transmitting, by way of a communication network, said control information that has been transmitted on said communication network to first servers that have been determined in advance of said plurality of first servers;
wherein each of said first servers, based on said control information that has been transmitted in from said second server, controls said electronic competition means that is connected to that first server by way of the communication network.

13. An electronic competition network system according to claim 12, wherein said second server transmits, by way of a communication network, said control information that has been transmitted on said communication network to first servers of said plurality of first servers that have been determined in advance by the first server that is a transmission source of said control information.

14. An electronic competition network system according to claim 12 or 13, wherein said second server transmits, by way of a communication network, said control information that has been transmitted on said communication network to first servers that have been determined in advance by another computer.

15. An electronic competition network system according to claim 12, 13 or 14, wherein said second server changes transmission destinations of said control information that has been transmitted on said communication network according to a time or a time period.

16. A system according to any one of claims
1 to 11, wherein said first servers manage participant registrations of competitors that are to compete.

17. A system according to any one of claims
12 to 15, wherein said first servers manage participant registrations of competitors that are to compete.

18. An electronic competition network system according to claim 16 or 17, wherein said first servers publish, on said communication network, information relating to competitors who have completed said participant registration.

19. An electronic competition network system according to claim 18, wherein said first servers perform scheduling of said competitors.

20. An electronic competition network system according to claim 19, wherein said first servers manage a progress of a competition of said competitors.

21. A system according to any one of claims
1 to 20, wherein said first servers, based on said competition results, select competitors who are to participate in a next competition to be held from among competitors that have completed said participant registration.

22. A system according to any one of claims
1 to 21, wherein said first servers publish, on said communication network, information relating to said competitors that have been selected.

23. A system according to any one of claims
1 to 22, wherein information relating to said competitors that have been selected includes pictures of said competitors.

24. A system according to any one of claims
1 to 23, wherein said electronic competition means comprises:
a light-beam gun for emitting light bullets;
a strike point detection means for detecting strike points when light bullets that have been emitted from said light-beam gun strike a target; and
a competitor computer that is connected to said strike point detection means by way of a communication network for calculating scores based on strike points of said light bullets, and for displaying scores that have been calculated or strike points of said light bullets.

25. An electronic competition network system according to any one of claims 12 to 24, wherein said electronic competition means comprises:
a light-beam gun for emitting light bullets;
a strike point detection means for detecting strike points when light bullets that have been emitted from said light-beam gun strike a target; and
a competitor computer that is connected with said strike point detection means by way of a communication network for calculating scores based on strike points of said light bullets and for displaying scores that have been calculated or strike points of said light bullets.

26. An electronic competition network system according to claim 24 or 25, wherein said competitor computer has data base clients that are capable of accessing data that are managed by said first server.

27. An electronic competition network system according to claim 24, 25 or 26, wherein said competitor computer comprises:
identification information input means for receiving identification information that enables identification of competitors that are to take part in said competition;
and wherein said first servers comprise:
authentication means for collating identification information that has been received by way of said identification information input means with identification information that has been registered in advance, and, when two forms of identification information match, for recognizing that a person who has applied identification information as input by way of said identification information input means is a competitor that is identified by said identification information.

28. An electronic competition network system according to claim 24, 25, 26 or 27, wherein a resolution of said strike point detection means is set based on a competition level.

29. An electronic competition method for using electronic competition means that are installed at each of a plurality of competition sites to hold the same type of electronic competition, said electronic competition method comprising the steps of:
successively accumulating competition progress and competition results of a competition that is held using said electronic competition means at said plurality of competition sites and managing the accumulated competition progress and competition results as a database by means of servers that are installed at each of said plurality of competition sites;
transmitting the competition progress or competition results of a competition that is held using said electronic competition means at said plurality of competition sites, from said servers onto a communication network;
transmitting, by way of a communication network, said competition progress or competition results that have been transmitted onto said communication network, to servers that have been determined in advance from among servers that are installed at each of said plurality of competition sites; and
successively accumulating said competition progress or competition results that have been transmitted by way of said communication network together with competition progress and competition results that are managed as said database, and managing said accumulated competition progress and competition results as a database.

30. An electronic competition method according to claim 29, wherein said competition progress or competition results that have been transmitted onto said communication network are transmitted by way of a communication network to, of servers that are installed at each of said plurality of competition sites, servers that have been determined in advance by a server that is a transmission source of said competition progress or competition results.

31. An electronic competition method according to claim 29 or 30, wherein said competition progress or competition results that have been transmitted onto said communication network are transmitted by way of a communication network to servers that have been determined in advance by another computer.

32. An electronic competition method according to claim 29, 30 or 31, further comprising the step of transmitting to servers that have been determined in advance, of information that is included in said competition progress or competition results that have been transmitted onto said communication network, only information that has been determined according to transmission destinations.

33. An electronic competition method according to claim 32, wherein the information that is transmitted to said servers changes according to a time or a time period.

34. An electronic competition method according to claim 32 or 33, wherein the transmission destinations of said competition progress or competition results that are transmitted onto the communication network change according to a time or a time period.

35. A method according to claim 32, 33 or 34,
further comprising the step of publishing said competition progress or competition results on a communication network that is provided at said competition sites.

36. A method according to claim 32, 33, 34 or 35,
further comprising the step of displaying said competition progress or competition results on a display means that is provided at said competition sites.

37. An electronic competition method according to
any one of claims 29 to 36, wherein:
said competition progress or competition results are transmitted to a Web server that can connect to a communication network; and
said competition progress or competition results are published by means of said Web server.

38. A method according to any one of claims 29 to 37, further comprising the steps of:
transmitting said competition progress or competition results that have been transmitted onto said communication network to an integrative server that is connected by way of said server; and
integrating and managing said competition progress or competition results that have been transmitted in by way of said server, by means of said integrative server.

39. An electronic competition method for using said electronic competition means that are installed at each of a plurality of competition sites to hold a same type of competition, said electronic competition method comprising the steps of:
controlling a progress of a competition that is held using said electronic competition means at said plurality of competition sites;
transmitting, on a communication network, control information from a server for controlling the progress of a competition that is held using said electronic competition means at said plurality of competition sites;
transmitting, by way of a communication network, said control information that has been transmitted onto said communication network to, of servers that are installed at each of said plurality of competition sites, servers that have been determined in advance; and
controlling said electronic competition means based on said control information that has been transmitted in by way of said communication network.

40. An electronic competition method according to claim 39, wherein said control information that has been transmitted on said communication network is transmitted by way of a communication network to, of servers that are installed at each of said plurality of competition sites, servers that have been determined in advance by a server that is a transmission source of said control information.

41. An electronic competition method according to claim 39 or 40, wherein said control information that has been transmitted onto said communication network is transmitted by way of a communication network to servers that have been determined in advance by another computer.

42. An electronic competition method according to claim 39, 40 or 41, wherein transmission destinations of said control information that has been transmitted onto said communication network changes according to a time or a time period.

43. A method according to any one of claims 29 to 42, further comprising the step of managing, by means of said servers, a participant registration of competitors that are to take part in said competition.

44. A method according to any one of claims 39 to 43, further comprising the step of managing, by means of said servers, a participant registrations of competitors that are to take part in said competition.

45. An electronic competition method according to claim **43 or** 44, **further** comprising **the step of** publishing, **on a** communication network that is provided in said competition sites, information that relates to competitors that have completed said participant registration.

46. An electronic competition method according to claim 43, 44 or 45, further comprising the step of performing scheduling of said competitors by means of said servers.

47. An electronic competition method according to claim 46, further comprising the step of managing a progress of competition of said competitors by means of said servers.

48. A method according to any one of claims 43 to 47, further comprising the step of using said servers to select, from among competitors that have performed said participant registration, those competitors that are to participate in a next competition based on competition results.

49. An electronic competition method according to claim 48, wherein information that relates to said competitors that have been selected is published on a communication network that is provided at said competition sites.

50. An electronic competition method according to claim 49, wherein information that relates to said competitors that have been selected includes pictures of these competitors.

51. A method according to any one of claims 29 to 50, further comprising the steps of:
registering in advance identification information that can identify competitors that are to take part in said competition;
collating identification information that has been registered in advance with the identification information that has been applied as input from an outside, when identification information that can identify a competitor that is to take part in said competition is applied as input from the outside; and
recognizing a person that applied said identification information as input from the outside as the competitor identified by said identification information, when two forms of identification information match.

52. A server for use in an electronic competition network system for using electronic competition means that are installed in each of a plurality of competition sites to hold a same type of electronic competition, said server comprising:
a database for registering, of said plurality of competition sites, those competition sites to which competition progress or competition results at said plurality of competition sites are to be transmitted; and
a relay control means for, when competition progress or competition results at said competition sites are transmitted from said competition sites by way of a communication network, transmitting competition progress or competition results that have been transmitted from said competition sites to competition sites that have been registered in said database as transmission destinations of the competition progress or competition results that have been transmitted from said competition sites.

53. A server according to claim 52, wherein, of information that is included in said competition progress or competition results that have been transmitted onto a communication network, only information that is determined according to said transmission destinations is transmitted to competition sites that have been determined in advance.

54. A server according to claim 53, wherein said information that is transmitted to said competition sites changes according to a time or a time period.

55. A server according to claim 52, 53 or 54, wherein said transmission destinations of said competition progress or competition results that has been transmitted onto a communication network changes according to a time or a time period.

56. A server for use in an electronic competition network system for using electronic competition means that are installed in each of a plurality of competition sites to hold a same type of electronic competition, said server comprising:
a database for registering, of said plurality of competition sites, those competition sites to which control information for controlling a progress of a competition at said plurality of competition sites is to be transmitted; and
a relay control means for, when said control information is to be transmitted from said competition site by way of a communication network, transmitting control information that has been transmitted from that competition site to competition sites that have been registered in said database.

57. A server according to claim 56, wherein transmission destinations of said control information that is transmitted onto a communication network changes according to a time or a time period.

58. A server according to any one of claims 52 to 57, said server being provided with a computer program for executing procedures of:
receiving, by way of a communication network, competition progress or competition results that have been transmitted from said competition sites; and
transmitting said competition progress or competition results that have been received to competition sites that have been determined in advance.

59. A server according to any one of claims 52 to 58, said server being provided with a computer program for executing procedures of:
receiving, by way of a communication network, competition progress or competition results that have been transmitted from said competition sites;
identifying the competition site of a transmission source of said competition progress or competition results that have been received;
referring to said database and determining transmission destinations of competition progress or competition results that have been transmitted from said competition site that has been identified; and
transmitting said competition progress or competition results that have been received to said competition sites that have been determined.

60. A server according to claim 56, 57, 58 or 59, being provided with a computer program for executing procedures of:
receiving, by way of a communication network, control information that has been transmitted from said competition sites; and
transmitting said control information that has been received to competition sites that have been determined in advance.

61. A server according to claim 56, 57, 58 or 59, being provided with a computer program for executing procedures of:
receiving, by way of a communication network, control information that has been transmitted from said competition sites;
identifying the competition sites that are transmission sources of said control information that has been received;
referring to said database and determining transmission destinations of control information that has been transmitted from said identified competition sites; and
transmitting said received control information to said determined competition sites.
